# EUROPÄISCHE PATENTSCHRIFT

(11) **EP 0 995 919 B1**
(45) Veröffentlichungstag und Bekanntmachung des Hinweises auf die Patenterteilung: **01.02.2006**
(21) Anmeldenummer: 99116497.1
(22) Anmeldetag: 23.08.1999
(51) Int. Cl.: F16D 55/228, F16D 65/00

(54) **Bremssattel für eine Teilbelagscheibenbremse**
Brake caliper for a partly lined disc brake
Etrier de frein pour frein à disque à garnitures partielles

(30) Priorität: 23.10.1998 DE 29818886 U
(43) Veröffentlichungstag der Anmeldung: 26.04.2000
(73) Patentinhaber: Dr.Ing. h.c.F. Porsche Aktiengesellschaft, 70435 Stuttgart (DE)
(72) Erfinder: Martin, Roland, 71287 Weissach (DE)

(56) Entgegenhaltungen:
- DE-A- 4 212 558
- DE-A- 4 420 652
- DE-A- 19 652 123
- US-A- 4 381 336

## Beschreibung

Die Neuerung bezieht sich auf einen Bremssattel gemäß dem Oberbegriff des Anspruches 1 für eine Teilbelagscheibenbremse.

Ein derartiger Bremssattel ist im Wesentlichen aus der DE-OS 44 20 652 bekannt. Der dort vorgesehene, monolithisch aus einem Metall gegossene Bremssattel ist zur Verbesserung seiner thermischen Eigenschaften als Verbundgußteil ausgebildet, in der Weise, daß in den Gußkörper des Bremssattels ein von dessen Außenseite wesentlich beabstandetes Leitungsrohr für einen Kühlmittelumlauf, wenigstens in seinen beiden das Brückenteil bildenden Bereichen eingegossen ist. Eine derartige oder auch eine vergleichsweise Ausstattung eines Bremssattels mit einem Kühlmittelkreislauf kann nur dann zu einer Verbesserung der thermischen Eigenschaften des Bremssattels führen, wenn gleichzeitig ein Anschluß an ein Rückkühlsystem für das Kühlmittel vorhanden ist, was dann zwar tatsächlich eine Optimierung der thermischen Eigenschaften des Bremssattels ermöglicht, aber naturgemäß zu einem sehr hohen Gesamtaufwand für die Verbesserung alleine der thermischen Eigenschaften eines Bremssattels führt, ohne aber gleichzeitig auch eine nennenswerte Änderung in Richtung auf eine Verbesserung der schwingungstechnischen Eigenschaften des Bremssattels zu bewirken.

Auf der anderen Seite sind auch bereits, z.B. aus der DE-0S 3918 369 Vorschläge bekannt das schwingungstechnische Verhalten eines Bremssattels durch eine Veränderung seiner Masse zu verbessern. Diese bekannten Vorschläge sehen jedoch die gezielte Anbringung von Zusatzmassen an bestimmten ausgewählten Stellen oder Bereichen des Bremssattels vor und führen damit auf der einen Seite zwar sicherlich zu einer gewissen Verbesserung des Schwingungsverhaltens des Bremssattels, sind dafür aber ihrer Natur nach mit dem Nachteil behaftet, daß sie unabhängig von Abwandlungen in der Ausgestaltungform eine Gewichtserhöhung des Bremssattels zur Folge haben, also eine Erscheinung, die im modemen Fahrzeugbau im allgemeinen und gerade an den ungefederten Teilen bzw. Massen des Fahrwerkes des Fahrzeuges auch herkömmlicherweise im höchsten Maße unerwünscht ist.

Der Neuerung liegt daher die Aufgabe zugrunde einen Bremssattel der im Oberbegriff des Anspruches 1 dahingehend weiter auszubilden, daß bei gleicher Festigkeit des Bremssattels sowohl eine Verbesserung des Schwingungsverhaltens als auch eine Verringerung des Gesamtgewichtes gewährleistet und in einer Weiterbildung zudem auch noch eine Optimierung der thermischen Eigenschaften erreichbar ist.

Diese Aufgabe wird neuerungsgemäß in der Hauptsache durch die im Anspruch 1 angegebenen Merkmale gelöst.

Vorteilhafte Ausgestaltungsformen sind in den Unteransprüchen 2 bis 8 aufgezeigt.

Die in den beiden das Brückenteil des Bremssattels bildenden Bereichen ausgebildeten geschlossenen Hohlräume bilden zunächst Dämpfungskammern, welche das Schwingungsverhalten des Bremssattels verbessern und erlauben zugleich eine beträchtliche Verringerung des Gesamtgewichtes des Bremssattels. Diese Vorteile werden zwar grundsätzlich auch bei einem Bremssattel, der aus einem als Monoblock hergestellten Gußteil besteht, erzielt, jedoch ist die Herstellung eines solchen, geschlossene Hohlkammern aufweisenden Gußteiles verhältnismäßig schwierig und aufwendig, dies zumal dann wenn die Umfangswandungen der Hohlkammern mit kontinuierlicher Wandungsstärke und zudem dünnwandig ausgebildet sein sollen.

In einer herstellungstechnisch günstigeren Gestaltungsweise ist daher vorgesehen, daß der Bremssattel aus wenigstens zwei entlang einer Trennebene mittels eines Fügeverfahrens untereinander verbundenen Gußformteilen besteht, wobei als bevorzugte Fügeverfahren Schweißverfahren in Betracht kommen, insbesondere Laserschweißen oder Elektronenstahlschweißen. Eine Herstellung des Bremssattels aus fügetechnisch untereinander verbundenen Gußformteilen kann in einer Weiterbildung auch dazu verwendet werden, Hohlkammern auch im einen oder anderen bzw. naturgemäß auch in beiden Schenkeln des Bremssattels auszubilden bzw. anzuordnen.

Ausgehend von der Tatsache, daß eine Herstellung des Bremssattels aus untereinander entlang von Trennebenen mittels eines Fügeverfahrens verbundenen Gußformteilen zu einer hinsichtlich der die Hohlkammern bildenden Ausnehmungen in den Gußformteilen druck- und dampfdicht verschlossenen Hohlraumgestaltung führt eröffnet dann im Weiteren die Möglichkeit die Hohlkammern wahlweise in besonderer Weise auszustatten, z.B. zur Verbesserung der thermischen Eigenschaften des Bremssattels, insbesondere zum Abbau von Spitzentemperaturen, mindestens teilweise mit einem Wärmeleitstoff, wie beispielsweise Natrium, zu befüllen. Gleichermaßen kann aber auch eine wenigstens teilweise Befüllung der Hohlkammern mit einem schwingungsdämpfenden Material, unter anderen beispielsweise einem Metallschaum vorgesehen werden.

Die Neuerung ist in der nachfolgenden Beispielsbeschreibung anhand eines in der Zeichnung dargestellten Ausführungsbeispieles im Einzelnen beschrieben.

In der Zeichnung zeigt die
- Fig. 1: eine Draufsicht auf einen Bremssattel für eine Teilbelagscheibenbremse,
- Fig. 2: einen Schnitt durch den Bremssattel nach Figur 1 entlang der Linie II-II,
- Fig. 3: einen Schnitt durch den Bremssattel nach Figur 1 entlang der Linie III-III und
- Fig. 4: einen Schnitt durch den Bremssattel nach Figur 1 entlang der Linie IV-IV.

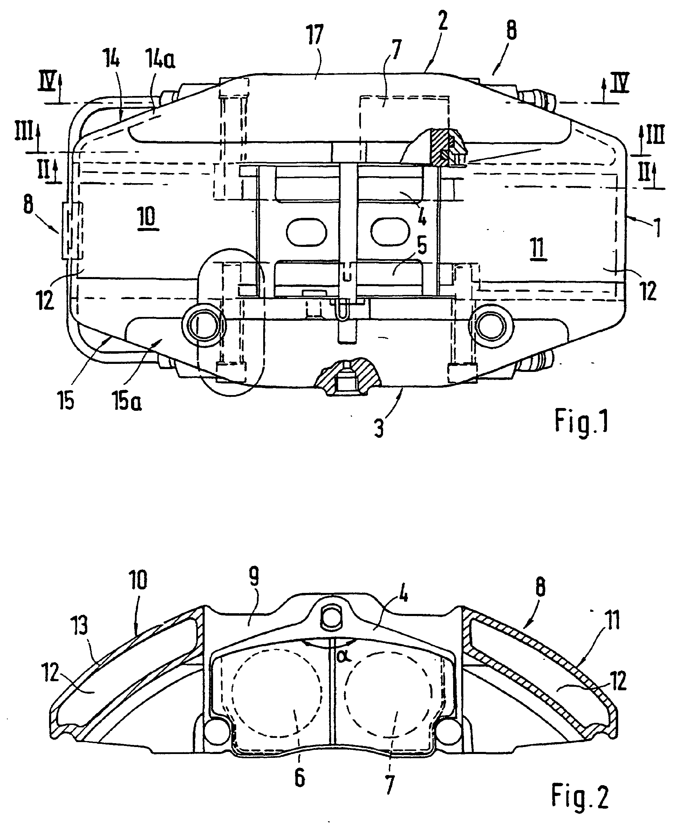

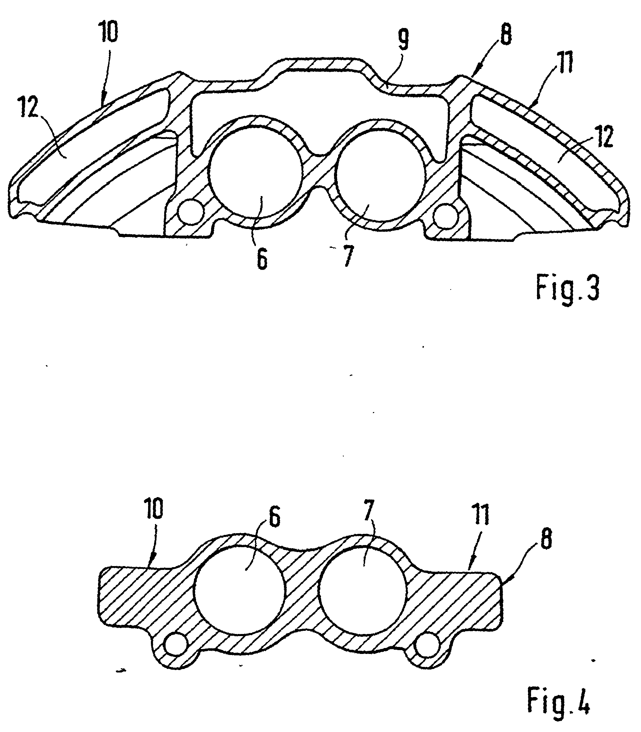

In der Zeichnung sind mehr oder minder schematisch Schnitte durch Bremssättel 1 für im Übrigen im Einzelnen nicht näher dargestellte Teilbelagscheibenbremsen dargestellt. Die Bremssättel 1 weisen in der üblichen Weise eine zumindest im Wesentlichen symmetrisch U-förmige Gestalt auf und umgreifen eine in der Zeichnung nicht näher dargestellte Bremsscheibe teilweise, wobei in den beiden Schenkeln 2 und 3 der U-Form die Bremsbeläge 4 und 5 aufgenommen und geführt sind. Die Bremsbeläge 4 und 5 sind jeweils mittels ihrerseits in den Schenkeln 2 und 3 angeordneter bzw. aufgenommener Radbremszylinder 6 und 7 an die Seitenflächen der Bremsscheibe anpressbar. Das Brückenteil 8 des Bremssattels 1 besteht aus zwei ein den Zugriff zu den Bremsbelägen 4 und 5 gewährleistendes Fenster 9 zwischen sich einschließenden Brückenteilen 10 und 11. Wie insbesondere aus den Darstellungen der Figuren 2 und 3 ersichtlich schließen die beiden Brückenteile 10 und 11 jeweils einen Hohlraum 12 ein, dessen Umfangswandungen 13 umlaufend gleichförmig dünnwandig ausgebildet sind. Die in der Zeichnung dargestellten Bremssättel 1 sind jeweils als Gußteile ausgebildet, wobei der in den Figuren 1 und 2 dargestellte Bremssattel 1 aus zwei entlang einer Trennlinie II-II zusammengesetzten Guß-Formteilen 14 und 15 besteht. Bei dieser Ausgestaltungsform sind die beiden Formteile 14 und 15 zueinander spiegelbildlich ausgebildet, derart daß jedes der beiden Formteile 14 und 15 jeweils eine Hälfte der Hohlräume 12 bildende taschenförmige Ausnehmungen aufweist und beide Formteile entlang der Trennebene II-II mittels Laserschweißung miteinander verbunden sind.

Bei der Ausgestaltungsform nach Figur 1 und 3 ist das eine Formteil 15a mit taschenförmigen Ausnehmungen versehen, welche den Hauptteil der Hohlräume 12 bilden, während da andere Formteil 14a hinsichtlich der Hohlräume 12 lediglich ein Deckelteil bildet und bei zusammengefügten und miteinander mittels Laserschweißung verbundenen Formteilen 14a uns 15a die die Hohlräume 12 bildenden taschenartigen Ausnehmungen im Formteil 15a verschließt. In der durch den Schnitt IV-IV näher erläuterten Ausgestaltungsform eines Bremssattels 1 ist vorgesehen, daß wenigstens im Schenkel 2 des Bremssattels 1 gleichfalls Hohlräume ausgebildet sind. Zur Ausbildung der zusätzlichen Hohlräume in einem der Schenkel 2 und 3 besteht der Bremssattel 1 insgesamt aus drei entlang der zwei Trennebenen II-II oder III-III und IV-IV miteinander verbundenen und verschweißten Guß-Formteilen 14, 15 und 17, wobei das Formteil 14 mit die Hohlräume bildenden taschenförmigen Ausnehmungen versehen und das Formteil 17 im wesentlichen als Deckelteil für die im Formteil 14 vorgesehenen taschenförmigen Ausnehmungen ausgebildet ist.

## Patentansprüche

1. Bremssattel für eine Teilbelagscheibenbremse, welcher eine im allgemeinen U-förmige Querschnittsform aufweist und eine Bremsscheibe teilweise übergreift, wobei in innenliegenden Seiten der beiden parallel zur Bremsscheibe ausgerichteten Schenkel (2, 3) des Bremssattels Aufnahme- und Führungsformen für Bremsbeläge (4, 5) ausgebildet sind, und wobei in wenigstens einem der beiden Schenkel (2, 3) mindestens ein Radbremszylinder (6, 7) ausgebildet bzw. aufgenommen ist, und in dessen die Bremsscheibe überbrückenden Brückenteil (8) ein Fenster (9) für die Montage und Festlegung von Bremsbelägen vorgesehen ist, **dadurch gekennzeichnet, daß** zumindest in den die beiden Schenkel (2 und 3) der U-Form des Bremssattels (1) untereinander verbindenden Bereichen (10 und 11) des Brückenteiles (8) des Bremssattels (1) jeweils ein geschlossener Hohlraum (12) ausgebildet ist.

2. Bremssattel nach Anspruch 1, **dadurch gekennzeichnet, daß** die die beiden Schenkel (2 und 3) des Bremssattels (1) untereinander verbindenden Bereiche des Brückenteiles (8) bildenden Umfangswandungen (13) der Hohlräume (12) dünnwandig ausgebildet sind.

3. Bremssattel nach Anspruch 1 und 2, **dadurch gekennzeichnet, daß** bei einem insgesamt aus zwei Formteilen (14 und 15) gebildeten Bremssattel (19) die beiden Formteile (14 und 15) in einem Fügeverfahren miteinander verbunden sind und in den das Brückenteil (8) des Bremssattels (1) bildenden Bereichen mindestens eines der beiden Formteile (14 bzw. 15) eine einen Teil eines Hohlraumes (12) bildende Ausnehmung ausgebildet ist.

4. Bremssattel nach Anspruch 1 bis 3, **dadurch gekennzeichnet, daß** der Bremssattel (1) aus zwei entlang einer in der Mittelebene der Bremsscheibe liegenden Ebene miteinander verbundenen Formteilen (14 und 15) gebildet ist und die jeweils eine Hälfte eines Hohlraumes (12) bildenden Ausnehmungen in den beiden Formteilen (14 und 15) zueinander spiegelbildlich ausgebildet sind.

5. Bremssattel nach Anspruch 1 bis 3, **dadurch gekennzeichnet, daß** er aus zwei entlang einer mindestens annähernd in Verlängerung einer Seitenfläche der Bremsscheibe liegenden Ebene miteinander verbundenen Formteilen (14a und 15a) gebildet ist und die die Hohlräume (12) bildenden Ausnehmungen durch taschenartige Vertiefungen in den das Brückenteil (8) des Bremssattels (1) bildenden Bereichen des einen Formteiles (15a) gebildet sind.

6. Bremssattel nach einem der Ansprüche 1 bis 5, **dadurch gekennzeichnet, daß** zusätzlich zu den in dessen Brückenteil (8) vorgesehenen auch in mindestens einem der beiden Schenkel (2 und/oder 3) des Bremssattels (1) wenigstens ein Hohlraum ausgebildet ist und der Bremssattel (1) aus insgesamt wenigstens drei entlang zweier zur Ebene der Bremsscheibe paralleler Ebenen miteinander verbundenen Formteilen (14, 15, 17) zusammengesetzt ist.

7. Bremssattel nach Anspruch 6, **dadurch gekennzeichnet, daß** eine erste Verbindungsebene der den Bremssattel (1) bildenden Formteile die in den dessen Brückenteil (8) bildenden Bereichen (10 und 11) vorgesehenen Hohlräume (12) schneidet und die zweite Verbindungsebene in einem Schenkel (2, 3) des Bremssattels (1) liegt.

8. Bremssattel nach einem der Ansprüche 1 bis 7, **dadurch gekennzeichnet, daß** wenigstens die in den Brückenteilabschnitten (10 und 11) des Bremssattels (1) ausgebildeten Hohlräume (12) und mindestens teilweise mit einem Wärmeleitstoff, insbesondere Natrium, gefüllt sind.

9. Bremssattel nach einem der Ansprüche 1 bis 7, **dadurch gekennzeichnet, daß** wenigstens die in den Brückenteilabschnitten (10 und 11) des Bremssattels (1) ausgebildeten Hohlräume (12) und mindestens teilweise mit einem schwingungsdämpfenden Material befüllt sind.

## Claims

1. A brake calliper for a partly lined disc brake, which brake calliper has a generally U-shaped cross-sectional form and partly covers a brake disc, wherein holding and guiding forms for brake linings (4, 5) are formed in inner surfaces of the two arms (2, 3) of the brake calliper, the arms (2, 3) extending parallel to the brake disc, and wherein at least one wheel-brake cylinder (6, 7) is formed or held in at least one of the two arms (2, 3), and a window (9) for the mounting and fastening of brake linings is provided in a bridge part (8) bridging the brake disc, **characterised in that** a closed cavity (12) is formed at least in each of the regions (10 and 11) of the bridge part (8) of the brake calliper (1), the regions (10 and 11) connecting together the two arms (2 and 3) of the U shape of the brake calliper (1).

2. A brake calliper according to claim 1, **characterised in that** the peripheral walls (13) of the cavities (12) are thin-walled, the peripheral walls (13) forming the regions of the bridge part (8) connecting together the two arms (2 and 3) of the brake calliper (1).

3. A brake calliper according to claims 1 and 2, **characterised in that**, in a brake calliper (19) formed from a total of two moulded parts (14 and 15), the two moulded parts (14 and 15) are connected together in a joining process, and a recess forming part of a cavity (12) is formed in the regions - forming the bridge part (8) of the brake calliper (1) - of at least one of the two moulded parts (14 and 15).

4. A brake calliper according to claims 1 to 3, **characterised in that** the brake calliper (1) is formed from two moulded parts (14 and 15) connected together along a plane lying in the central plane of the brake disc, and the recesses each forming one half of a cavity (12) are formed in a mirror-image arrangement in the two moulded parts (14 and 15).

5. A brake calliper according to claims 1 to 3, **characterised in that** it is formed from two moulded parts (14a and 15a) connected together along a plane arranged at least approximately as an extension of a side surface of the brake disc, and the recesses forming the cavities (12) are formed by pocket-type depressions in the regions - forming the bridge part (8) of the brake calliper (1) - of the one moulded part (15a).

6. A brake calliper according to any one of claims 1 to 5, **characterised in that**, in addition to the cavity provided in its bridge part (8), at least one cavity is also formed in at least one of the two arms (2 and/or 3) of the brake calliper (1), and the brake calliper (1) is assembled from a total of at least three moulded parts (14, 15, 17) connected together along two planes extending parallel to the plane of the brake disc.

7. A brake calliper according to claim 6, **characterised in that** a first connecting plane of the moulded parts forming the brake calliper (1) intersects the cavities (12) provided in the regions (10 and 11) forming its bridge part (8), and the second connecting plane lies in an arm (2, 3) of the brake calliper (1).

8. A brake calliper according to any one of claims 1 to 7, **characterised in that** at least the cavities (12) formed in the bridge-part portions (10 and 11) of the brake calliper (1) are at least partly filled with a thermally conductive material, especially sodium.

9. A brake calliper according to any one of claims 1 to 7, **characterised in that** at least the cavities (12) formed in the bridge-part portions (10 and 11) of the brake calliper (1) are at least partly filled with a vibration-damping material.

## Revendications

1. Selle de frein pour un frein à disque à garniture partielle, qui présente section transversale généralement en forme de U et qui passe en partie sur un disque de frein, des formes de réception et de guidage pour des garnitures de frein (4, 5) étant réalisées dans des côtés situés à l'intérieur des deux branches (2, 3) de la selle de frein, orientées parallèlement au disque de frein, et dans au moins l'une des deux branches (2, 3) étant réalisé ou reçu au moins un cylindre de frein de roue (6, 7), et dans sa partie de pont (8) pontant le disque de frein, une fenêtre (9) étant prévue pour le montage et la fixation de garnitures de frein, **caractérisée en ce qu'**au moins dans chacune des zones (10 et 11) de la partie de pont (8) de la selle de frein (1), qui relient entre elles les deux branches (2 et 3) de la forme en U de la selle de frein (1), est réalisée une cavité (12) fermée.

2. Selle de frein selon la revendication 1, **caractérisée en ce que** les parois périphériques (13) des cavités (12), qui forment les zones de la partie de pont (8) reliant entre elles les deux branches (2 et 3) de la selle de frein (1), sont réalisées minces.

3. Selle de frein selon les revendications 1 et 2, **caractérisée en ce que** dans le cas d'une selle de frein (19), formée dans son ensemble à partir de deux pièces moulées (14 et 15), les deux pièces moulées (14 et 15) sont reliées entre elles par un procédé d'assemblage et dans les zones, formant la partie de pont (8) de la selle de frein (1), d'au moins l'une des deux pièces moulées (14 ou 15), est réalisé un évidement formant une partie d'une cavité (12).

4. Selle de frein selon les revendications 1 à 3, **caractérisée en ce que** la selle de frein (1) est formée par deux pièces moulées (14 et 15) reliées entre elles le long d'un plan situé dans le plan médian du disque de frein, et les évidements, formant chacun une moitié d'une cavité (12), sont réalisés dans une symétrie en miroir l'un par rapport à l'autre dans les deux pièces moulées (14 et 15).

5. Selle de frein selon les revendications 1 à 3, **caractérisée en ce qu'**elle est formée par deux pièces moulées (14a et 15a) reliées entre elles le long d'un plan situé au moins approximativement dans le prolongement d'une face latérale du disque de frein, et les évidements formant les cavités (12) sont formés par des renfoncements de type poche dans les zones d'une pièce moulée (15a) qui forment la partie de pont (8) de la selle de frein (1).

6. Selle de frein selon l'une des revendications 1 à 5, **caractérisée en ce qu'**outre les cavités prévues dans sa partie de pont (8) il est réalisé aussi dans au moins l'une des deux branches (2 et/ou 3) de la selle de frein (1), au moins une cavité, et la selle de frein (1) se compose au total d'au moins trois pièces moulées (14, 15, 17) reliées entre elles le long de deux plans parallèles au plan du disque de frein.

7. Selle de frein selon la revendication 6, **caractérisée en ce qu'**un premier plan de liaison des pièces moulées formant la selle de frein (1), coupe les cavités (12) prévues dans les zones (10 et 11) formant sa partie de pont (8), et le deuxième plan de liaison se situe dans une branche (2, 3) de la selle de frein (1).

8. Selle de frein selon l'une des revendications 1 à 7, **caractérisée en ce qu'**au moins les cavités (12) réalisées dans les zones (10 et 11) de la partie de pont de la selle de frein (1) sont remplies au moins en partie d'un matériau thermoconducteur, en particulier de sodium.

9. Selle de frein selon l'une des revendications 1 à 7, **caractérisé en ce qu'**au moins les cavités (12), réalisées dans les zones (10 et 11) de la partie de pont de la selle de frein (1), sont remplies au moins en partie d'un matériau amortissant les oscillations.
